Europäisches Patentamt

European Patent Office

Office européen des brevets

(19)

(11) Publication number: **0 067 256**

A1

(12) # EUROPEAN PATENT APPLICATION

(21) Application number: **81302636.6**

(22) Date of filing: **15.06.81**

(51) Int. Cl.³: **B 60 Q 1/14**

(43) Date of publication of application:
**22.12.82 Bulletin 82/51**

(84) Designated Contracting States:
**DE FR IT**

(71) Applicant: **G.R.K. Products Limited**
**62, Reddenhill Road**
**Torquay Devon(GB)**

(72) Inventor: **Chilvers, Graham**
**62 Reddenhill Road**
**Torquay Devon(GB)**

(74) Representative: **Stephens, Michael John et al,**
**M.J. Stephens & Co. Royal Building 11 St. Andrew's**
**Cross**
**Plymouth Devon PL1 2DS(GB)**

(54) Light activated control system.

(57) A system for mounting, for example, on a parked vehicle, includes a comparator (9) which compares a first input (8a) from a photo-electric ambient light sensor (6) with a second input (8b) connected to a capacitor (C5) which averages continuously the output of the photo-electric light sensor. The capacitive input (8b) constitutes a continuously varying reference voltage level, and the comparator responds to a rate of change of the sensed ambient light, corresponding for example to the approach of a vehicle at night, to trigger a control circuit (T1, T2) which operates a warning device (10) including, for example, the vehicle external lights.

FIG.1.

EP 0 067 256 A1

"Light activated control system"

The present invention relates to a light activated control system, particularly, but not exclusively, for use in vehicles to control a warning device.

Even where there is no legal obligation to provide warning lights on vehicles parked at night in built-up areas, it is desirable to provide some form of lighting to avoid accidents due to vehicles colliding at night with unlit parked vehicles.

At present vehicle owners are reluctant to light parked vehicles overnight since the only effective method is to leave the sidelights on, with consequent drain on the battery.

A known system for the automatic control of parking or other external lamps on a vehicle in response to the photoelectric detection of the lights of an approaching vehicle is described in my United Kingdom Patent specification No. 1567306. An object of the present invention is to provide an improved and simplified light-activated control system for use on vehicles or in other situations where it is desired to control operation of a warning or other output device in response to sensed light levels.

According to the invention there is provided a light-activated control system comprising: a comparator circuit having first and second inputs; photoelectric ambient light sensing means connected to the first comparator input to provide a signal voltage level at said input representative of the instantaneous output of the sensing means; capacitive means connected to the second comparator input and to the sensing means for averaging continuously the output of the sensing means to provide at said second input a continuously varying reference voltage level, and warning or other output means connected to the output of the comparator circuit through triggering means which trigger warning means into operation when the light intensity at the sensing means increases at a rate such that the said signal voltage level passes the said reference voltage level, to cause operation of the warning means.

In a preferred embodiment of the invention increasing light intensity at the sensing means will cause the signal voltage level to fall, until it passes the reference voltage level to cause operation of the warning means.

In a preferred embodiment of the invention increasing light intensity at the sensing means will cause the signal voltage level to fall, until it passes the reference voltage level to cause operation of the warning means.

The system preferably includes a series resistor connected to the second comparator input, the capacitive means being charged by the output of the sensing means through said series resistor, a diode and further resistor being connected in series with each other across said series resistor in the charging path of the capacitive means, said diode being forward-biassed by the output from the sensing means which corresponds to a decrease in ambient light intensity.

In use of the invention to control a warning device on a parked vehicle at night the light sensing means may include a sensor or sensors at the rear of the vehicle, the control system being connected to operate a visual warning device whic may, for example, be constituted by the tail lights, brake lights, parking lights, and/or the front side lights of the vehicle, which in this case may constitute the warning device. Further light sensing means may be located at the front of the vehicle to trigger the control system independently of the rear sensing means provided the light on each sensor is below an ambient threshold level before triggering of the circuit.

The system may include a capacitive shunt connected to the output of the sensing means to exclude from said sensing means output transient signals resulting from rapid changes in ambient light intensity at alternating current mains frequency and higher frequencies.

The invention also comprehends a control system as herein described when associated with any suitable warning device, for example vehicle lights, and further comprehends a vehicle equipped with such a system.

The invention will now be more particularly described, by way of example, with reference to the accompanying purely diagrammatic drawings, in which:

Figure 1 is a circuit diagram of a control system according to one embodiment of the invention, and

Figure 2 illustrates a circuit diagram of one form of warning device applicable to the circuit shown in Figure 1.

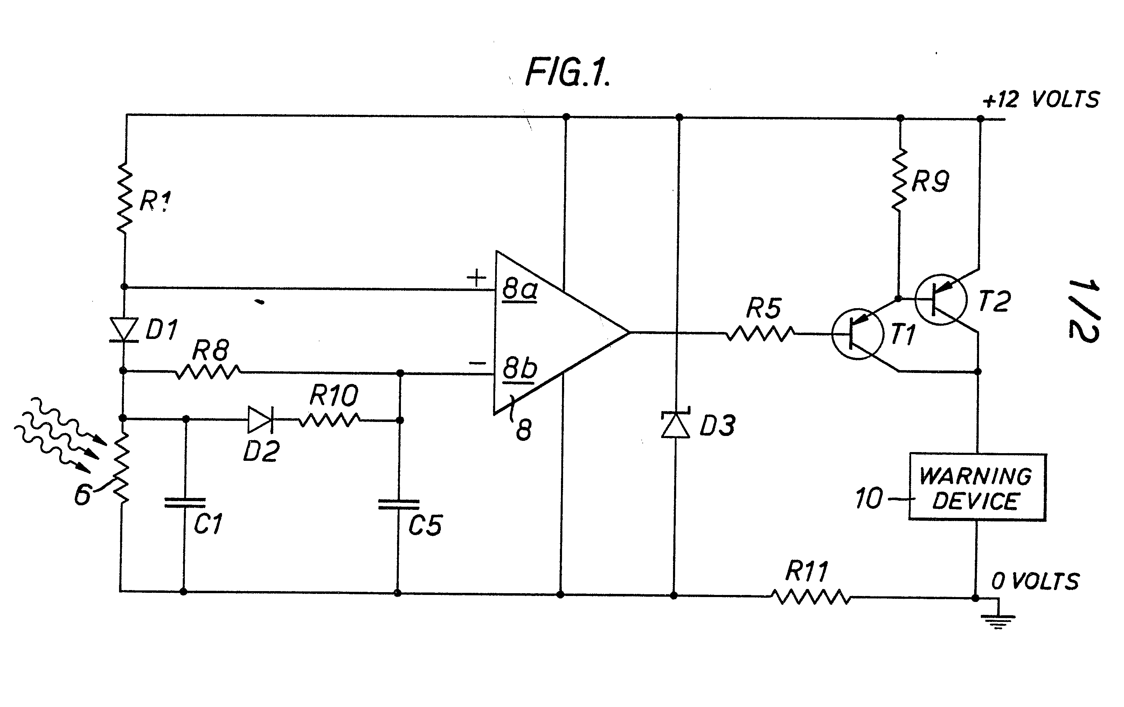

Referring to Figure 1, the control system according to the invention comprises a comparator 8, which in this example is constituted by an operational amplifier arranged as a Schmitt trigger, connected directly through a current - limiting resistor R5 to switching transistor T1, which in turn controls a second switching transistor T2. The collector circuit of the transistor T2 includes a warning device 10, which may be an audible and/or visible device. The warning device may include the parking lights of the motor vehicle to which the system is fitted.

The comparator 8 has two inputs 8a and 8b connected to respective junction points in a potential divider connected across the D.C. power supply. The potential divider comprises a photocell 6, in this case a photoresistive element, a resistor R1 and a diode D1, the latter being connected across the two comparator inputs 8a and 8b. The comparator input 8b is connected to the junction point of diode D1 and photocell 6 through a resistor R8, the input 8b being also connected directly to the negative supply line (earth) through a capacitor C5.

The photocell 6 is mounted at the rear of the vehicle, to be responsive to the headlights of vehicles approaching from the rear. The photocell 6 would in practice be mounted in a housing containing the circuit of the control system and mounted, for example, on a rear bumper of the vehicle.

In use of the system the diode D1 is always conducting in its forward direction, and the voltage across the diode D1 will be about 0.4 volts. With static illumination of the photocell 6, the input 8a of the comparator 8 will therefore be at a potential 0.4 volts higher than the input 8b.

When the photocell 6 is illuminated by the headlights of an approaching vehicle the sudden increase in the light level will cause a voltage drop at the input 8a of the comparator 8, while the voltage at the input 8b will remain substantially unchanged because the integrating action of resistor R8 and capacitor C5 will allow only a slow change in the voltage at input 8b. If the sensed increase in light level is sufficiently rapid to cause a drop in the voltage on the input 8a of more than 0.4 volts then the output potential of the comparator 8 will switch over from a voltage near that of the positive supply rail to a voltage near the negative supply rail.

When the comparator output voltage drops to a voltage near that of the negative supply rail (O volts) it forward-biases transistor T1 which in turn forward-biases transistor T2, supplying current to the warning device 10 to energize the latter.

If the external light source illumination the photocell 6 is now removed (due, for example, to the approaching vehicle having passed by) the voltage on the input 8a of the comparator 8 will rise to its original potential, which is higher than that on the input 8b. This causes the output of the comparator 8 to switch back to a voltage near the positive rail potential, switching off or reverse-biasing transistor T1 and, in turn transistor T2, thereby switching off the warning device 10.

The resistor R9 across the base-emitter of transistor T2 ensures complete switching-off of transistor T2.

A resistor R10 is connected in series with a diode D2 in parallel with resistor R8. The diode D2 is forward-biased while the capacitor C2 is charging (that is, when the circuit is adjusting to darkness) and reverse-biased when capacitor C2 is discharging (that is, when the circuit is adjusting to lightness). Consequently the circuit adjusts to darkness faster than it adjusts to an increase in the sensed light level.

A capacitor C1 connected across the photocell 6 suppresses the effects of lightning and rapid transients, including AC component voltages.

A Zener diode D3 and a resistor R11 form a substantially stable power supply for the sensing circuit, cushioning it from variations likely to occur in practice in the supply voltage.

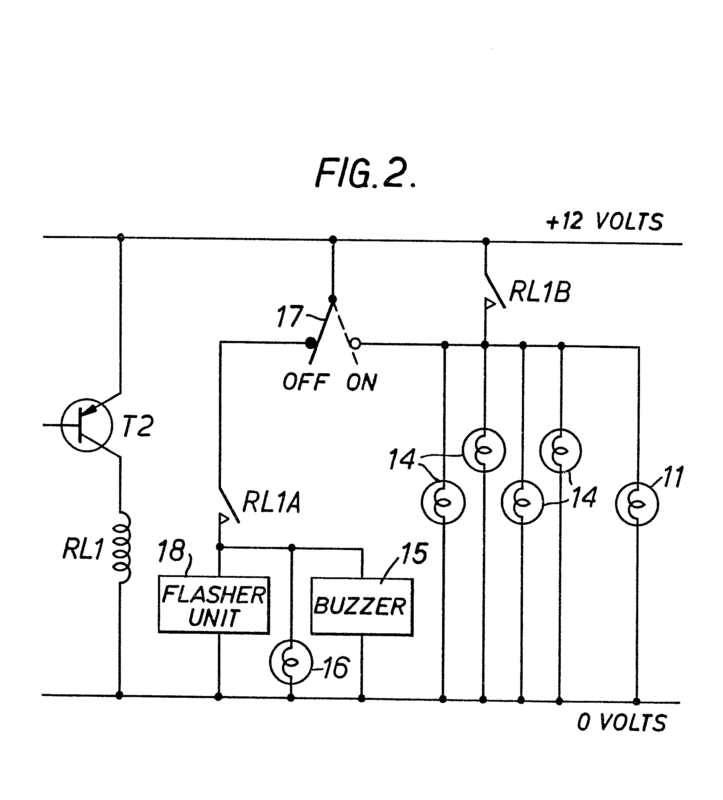

Figure 2 shows one example of warning device 10 including an external warning lamp 11 mounted on the vehicle and the front and rear parking lamps 14. The warning device 10 also includes an energising circuit for a buzzer 15 and a dashboard warning lamp 16.

The warning device 10 in this example includes a relay RL1 having two associated normally-open relay switches RL1A and RL1B. The relay switch RL1A is connected in series with the buzzer 15 and with a flasher unit 18, arranged to switch vehicle hazard warning lights on and off periodically. The hazard warning lights would usually be constituted by the direction indicator lights of the vehicle (not shown). The relay switch RL1B is connected in series with the lamps 11 and 14 of the vehicle, and in parallel with a two-way manual selective switch 17. When the selector switch 17 is in the 'OFF' position shown by full lines, the power supply is connected to the relay switch RL1A, while when the switch 17 is in the 'ON' position shown by broken lines, the relay switch RL1A is isolated and the relay switch RL1B is shunted, switching on the lamps 11 and 14 while isolating the buzzer 15 and warning lamp 16. Thus the buzzer 15 and lamp 16 are not energised if the external vehicle lamps 14 are already switched on by the switch 17.

This arrangement provides the driver with both an audible and visual warning if driving at night without the vehicle lamps 14 switched on.

An alternative use of a control system according to the invention would be to control a light on a road obstacle, such as a bollard, and particularly a temporary road obstacle, at night. The light may then be battery powered and the battery should last considerably longer than if used to power a light throughout the night.

The system may also be employed for the automatic operation of lights for illuminating roadside advertising signs in response to the lights of approaching vehicles.

CLAIMS

1. A light-activated control system including a comparator circuit (8) having first and second inputs (8a and 8b), and photoelectric ambient light sensing means (6) connected to said comparator (8) to provide a signal voltage level at said input (8a) representative of the instantaneous output of the sensing means

characterised in that

the system further comprises capacitive means (C5) connected to the second comparator input (8b) and to the sensing means (6) for averaging continuously the output of the sensing means to provide at said second input (8b) a continuously varying reference voltage level, and warning means (10) or other output means connected to the output of the comparator circuit through triggering means (T1, T2) which trigger the warning means into operation when the light intensity at the sensing means increases at a rate such that the said signal voltage level passes the said reference voltage level, to cause operation of the warning means.

2. A system as claimed in Claim 1, including a series resistor (R8) connected to the second comparator input (8b), the capacitive means (C5) being charged by the output of the sensing means (6) through said series resistor, a diode (D2) and further resistor (R10) being connected in series with each other across said series resistor (R8) in the charging path of the capacitive means (C5), said diode (D2) being forward-biassed by the output from the sensing means which corresponds to a decrease in ambient light intensity.

3. A system as claimed in Claim 1 or Claim 2, wherein said sensing means comprise a photoresistive element (6) which is connected to the first comparator input through a series-connected diode (D1) to maintain the first comparator input (8a) at a predetermined potential relative to the second comparator input (8b) in the quiescent state of the system, while enabling rapid response of the first comparator input in the event of
illumination of the photoresistive element.

4. A system as claimed in Claim 1 or Claim 2, including
a capacitive shunt (C1) connected to the sensing
means (6) to exclude from said sensing means output
transient signals resulting from rapid changes in
ambient light intensity at alternating current supply
frequency  and higher frequencies.

5. A system as claimed in any one of the preceding claims,
installed in a vehicle, with the light sensing means (6)
mounted at the rear of the vehicle to be responsive to
the lights of traffic approaching from the rear, the
warning or output means including external lights on
the vehicle.

6. A system as claimed in Claim 5, including further
light sensing means located at the front of the vehicle
to trigger the control system independently of the
rear sensing means.

FIG.1.

# FIG.2.

European Patent
Office

**EUROPEAN SEARCH REPORT**

Application number

EP 81 30 2636

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| YX | US - A - 4 249 160 (CHILVERS)<br>* Whole document *<br>-- | 1-6 | B 60 Q  1/14 |
| YA | GB - A - 2 061 489 (WARRINGTON)<br>* Whole document *<br>-- | 1-6 | |
| AD | GB - A - 1 567 306 (CHIVERS)<br>* Whole document *<br>----- | 1 | TECHNICAL FIELDS SEARCHED (Int.Cl. 3)<br><br>B 60 Q  1/14 |

CATEGORY OF
CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 05-02-1982 | ONILLON |

EPO Form 1503.1  06.78